# EUROPÄISCHE PATENTSCHRIFT

(11) **EP 1 088 036 B1**
(45) Veröffentlichungstag und Bekanntmachung des Hinweises auf die Patenterteilung: **18.12.2002**
(21) Anmeldenummer: 99922116.1
(22) Anmeldetag: 20.04.1999
(51) Int. Cl.: C09D 5/03, C08G 77/14, C08G 77/20, C08G 77/58, C09D 183/04, C09D 183/06, C09D 183/14

(54) **FESTE, AUFSCHMELZBARE UND THERMISCH HÄRTBARE MASSE, DEREN HERSTELLUNG UND DEREN VERWENDUNG**
SOLID, MELTABLE, THERMOHARDENINIG MASS, ITS PRODUCTION AND ITS USE
MASSE SOLIDE, FUSIBLE ET THERMODURCISSABLE, SA PRODUCTION ET SON UTILISATION

(30) Priorität: 21.04.1998 DE 19817785
(43) Veröffentlichungstag der Anmeldung: 04.04.2001
(73) Patentinhaber: Institut Für Neue Materialien gem. GmbH, 66123 Saarbrücken (DE)
(72) Erfinder: JONSCHKER, Gerhard, D-66583 Spiesen-Elversberg (DE); MUHLE, Jörg, D-53111 Bonn (DE); SCHMIDT, Helmut, D-66130 Saarbrücken (DE)
(74) Vertreter: Barz, Peter
(86) Internationale Anmeldenummer: EP9902666
(87) Internationale Veröffentlichungsnummer: WO99054412

(56) Entgegenhaltungen:
- EP-A- 0 263 428
- EP-A- 0 450 625
- DE-A- 3 917 535
- US-A- 5 280 098

## Beschreibung

Die vorliegende Erfindung betrifft eine feste, aufschmelzbare und thermisch härtbare anorganisch-organische Masse, deren Herstellung sowie deren Verwendung.

Die Verwendung von Pulverlacken hat sich in breitem Maße durchgesetzt, da diese im Gegensatz zu als Lösung aufgetragenen Beschichtungssystemen wesentlich geringere Mengen an flüchtigen Bestandteilen freisetzen und damit wesentlich umweltverträglicher eingesetzt werden können. Die Pulverlacke bestehen in der Regel aus thermoplastischen (organischen) gefüllten Polymer-Partikeln, die auf eine Substratoberfläche aufgebracht werden können und anschließend durch Erwärmen zerfließen. Dadurch entsteht eine dichte Schicht. Ein Nachteil derartiger Pulverlacke ist jedoch, daß sie wegen der Eigenschaften der sie aufbauenden Polymeren für viele Verwendungen nicht oder nur bedingt geeignet sind. Eine dieser nachteiligen Eigenschaften ist ein allmähliches Erweichungsverhalten, das eine fließfähige Phase nur bei relativ hohen Temperaturen ermöglicht, und, bedingt durch die auch bei diesen hohen Temperaturen noch vorliegende hohe Viskosität, die Notwendigkeit zur Anwendung von dicken Schichten (minimal 80 bis 100 µm). Darüber hinaus sind thermoplastische Werkstoffe durch ihre relativ schlechten mechanischen Eigenschaften gekennzeichnet. Dies trifft insbesondere auf die Abrieb- und Kratzfestigkeit zu.

Reaktive Systeme, besonders solche, die durch den Aufbau eines anorganischen Netzwerkes charakterisiert sind (z.B. über Sol-Gel-Techniken hergestellte anorganisch-organische Kompositwerkstoffe), besitzen zwar ausgezeichnete mechanische Eigenschaften und weisen hohe Abriebfestigkeiten auf, sind jedoch nicht thermoplastisch, da das anorganische Netzwerk spontan aufgebaut wird und schon bei Raumtemperatur zu so hohen Kondensationsgraden führt, daß keine Thermoplastizität auftreten kann.

Es wurde nun überraschenderweise gefunden, daß es möglich ist, die Bildung von (Hetero)polykondensaten auf der Basis von hydrolysierbaren Silanen und gegebenenfalls anderen hydrolysierbaren (Metall)verbindungen bei einem so niedrigen Vernetzungsgrad (Kondensationsgrad) zu stoppen, daß die entsprechenden Kondensate als aufschmelzbare Feststoffe anfallen, die zu einem niedrigviskosen Überzug aufgeschmolzen und daraufhin thermisch (und gegebenenfalls zusätzlich auch photochemisch) durch weitere Kondensation und gegebenenfalls durch Reaktion vorhandener organischer Gruppen ausgehärtet werden können. Dabei kann das Abstoppen der Bildung der (Hetero)polykondensate auf einem niedrigen Vernetzungsgrad durch eine Reihe von Maßnahmen, die unten näher erläutert werden, bewerkstelligt werden.

Gegenstand der vorliegenden Erfindung ist eine feste, aufschmelzbare und thermisch härtbare Masse, welche von mindestens einem hydrolysierbaren Silan und gegebenenfalls einer oder mehreren hydrolysierbaren Metallverbindungen abgeleitete Kondensate K umfaßt, wobei (1) sich an Zentralatomen M der Kondensate K Gruppen A befinden, die eine Weiterkondensation der Kondensate ermöglichen, (2) mindestens 70% der Zentralatome M eine oder mehrere daran gebundene nicht-hydrolysierbare organische Gruppen R aufweisen, von denen ein Teil durch mit den Zentralatomen M koordinierte komplexbildende Spezies ersetzt sein kann, und (3) die Kondensate K im Temperaturbereich von 50 bis 200°C ein Viskositätsminimum im Bereich von 10 mPa.s bis 150 Pa.s durchlaufen.

Die obige Masse eignet sich beispielsweise als Pulverlack zur Beschichtung von Substraten, z.B. zur Herstellung einer abriebfesten und antikorrosiven Beschichtung auf Metallen, beispielsweise als (klarer) Decklack (z.B. über einem Polyurethan-Basislack) in der Automobilindustrie.

Im folgenden wird die vorliegende Erfindung unter Bezugnahme auf bevorzugte Ausführungsformen derselben näher erläutert.

Bei den den Kondensaten K zugrundeliegenden monomeren hydrolysierbaren Verbindungen handelt es sich vorzugsweise um ein oder mehrere hydrolysierbare Silane, insbesondere Silane der allgemeinen Formel

RₙSiX₄₋ₙ,

worin R eine unten näher definierte organische Gruppe darstellt, die Gruppen X, die gleich oder verschieden sein können und vorzugsweise identisch sind, hydrolysierbare Reste darstellen und n den Wert 1, 2 oder 3, vorzugsweise 1 oder 2 und besonders bevorzugt 1, annehmen kann. Die Reste X werden vorzugsweise aus Halogenatomen (insbesondere Chlor und Brom), Alkoxygruppen, Alkylcarbonyl-gruppen und Acyloxygruppen ausgewählt, wobei Alkoxygruppen, insbesondere C₁₋₄-Alkoxygruppen wie Methoxy und Ethoxy, besonders bevorzugt sind.

Unter den eingesetzten hydrolysierbaren Silanen kann sich auch ein kleiner Teil (vorzugsweise weniger als 5 Mol-% auf Basis aller eingesetzten monomeren hydrolysierbaren Verbindungen) an Silanen der obigen Formel, in der n gleich 0 ist, befinden.

Die neben dem mindestens einen hydrolysierbaren Silan einsetzbaren hydrolysierbaren Metallverbindungen sind vorzugsweise solche, die sich von Metallen der Hauptgruppen IIIa und IVa sowie der Nebengruppen IVb, Vb und Vlb des Periodensystems ableiten, wobei Verbindungen von Aluminium, Titan und Zirkonium besonders bevorzugt sind. Bei den hydrolysierbaren Verbindungen der letztgenannten Elemente handelt es sich unter Berücksichtigung ihrer bei der Hydrolyse und Kondensation wesentlich höheren Reaktivität als derjenigen der Silicium-Verbindungen vorzugsweise um Komplexverbindungen, wobei auf einsetzbare Komplexbildner weiter unten noch näher eingegangen werden wird. Sollen entsprechende aktivere Verbindungen, z.B. die Alkoxide von Al, Ti und/oder Zr, eingesetzt werden, muß durch geeignete Maßnahmen dafür gesorgt werden, daß die hohe Reaktivität dieser Verbindungen nicht zu Problemen bei der Einstellung des gewünschten Kondensationsgrades bzw. des gewünschten Viskositätsverlaufs führt, z.B. durch Arbeiten bei niedriger Temperatur (z.B. 0°C oder darunter) und/oder Einsatz in geringen Mengen und/oder unter starker Verdünnung.

Vorzugsweise liegen in den in der erfindungsgemäßen Masse eingesetzten Kondensaten K mindestens 75, insbesondere mindestens 85 und besonders bevorzugt mindestens 95% (einschließlich 100%) der Zentralatome M als Siliciumatome vor, wobei der Rest auf 100% von den übrigen eingesetzten hydrolysierbaren Metallverbindungen, insbesondere Verbindungen von Al, Ti und Zr, stammt.

Bevorzugte Kondensate K enthalten mindestens 5, vorzugsweise mindestens 10 und insbesondere mindestens 20 Zentralatome M. Die Anzahl der Zentralatome M kann z.B. bis zu 300, vorzugsweise bis zu 200 und insbesondere bis zu 150 betragen. Die Zentralatome M sind vorzugsweise über Sauerstoffbrücken verbunden. Weiter ist es bevorzugt, daß mindestens 70 und vorzugsweise mindestens 80% der Zentralatome M über mindestens eine (nicht durch komplexbildende Spezies ersetzte) organische Gruppe R verfügen, wobei der gesamte Rest der Zentralatome M vorzugsweise mit komplexbildenden Spezies koordiniert ist.

Schließlich ist es auch bevorzugt, wenn das Zahlenverhältnis x der in den Kondensaten K vorhandenen Zentralatome M zu der Summe der an diesen Zentralatomen befindlichen, eine Weiterkondensation (anorganischen Vernetzung) ermöglichenden Gruppen A im Bereich von 1:2 bis 20:1, insbesondere 1:1 bis 10:1, besonders bevorzugt 2:1 bis 5:1, liegt. Bei diesen Gruppen A an den Zentralatomen M handelt es sich vorzugsweise um Hydroxy-, Alkoxy, Aryloxy-, Acyloxy- (z.B. Acetoxy), Enoxyoder Oximgruppen. Vorzugsweise sind mindestens 80% der eine Weiterkondensation ermöglichenden Bindungsstellen an den Zentralatomen M Gruppen A (z.B. Hydroxylgruppen), während die restlichen Bindungsstellen durch komplexbildende Spezies blockiert sind. Geeignete Komplexbildner sind beispielsweise Chelat-Bildner wie β-Diketone (z.B. Acetylaceton), β-Ketoester (z.B. Acetylacetat), organische Säuren (z.B. Essigsäure, Propionsäure, Acrylsäure, Methacrylsäure), α-Hydroxycarbonsäuren (z.B. α-Hydroxypropionsäure), aber auch anorganische komplexbildende Spezies wie z.B. Fluorid-, Thiocyanat-, Cyanat- und Cyanidionen sowie Ammoniak und quartäre Ammoniumsalze wie z.B. Tetraalkyl-ammoniumsalze (Chloride, Bromide, Hydroxide etc.), beispielsweise Tetramethyl- und Tetrahexylammoniumsalze.

Neben den oben genannten Zentralatomen M, die sich vorzugsweise von Si, Al, Ti und Zr ableiten, können die Kondensate K Endgruppen mit Alkali- und/oder Erdalkalimetallatomen aufweisen.

Um die Bildung der in der erfindungsgemäßen Masse eingesetzten Kondensate K mit dem gewünschten Viskositätsverhalten, relativ niedrigem Kondensationsgrad und einem relativ niedrigen Verhältnis von Zentralatomen zu zur Weiterkondensation befähigten Bindungsstellen zu begünstigen, können verschiedene Maßnahmen bzw. Kombinationen derselben eingesetzt werden. Zum Beispiel ist es, wie bereits oben erwähnt, möglich, die Polykondensation bei relativ niedrigen Temperaturen und/oder unter starker Verdünnung der (monomeren) hydrolysierbaren Ausgangsverbindungen und/oder bei stark verkürzten Kondensationszeiten durchzuführen. Erfindungsgemäß bevorzugt werden jedoch andere Maßnahmen, insbesondere die (Mit)-verwendung von hydrolysierbaren Ausgangsverbindungen, deren Kondensation durch sterisch anspruchsvolle(re) organische Gruppen R bei Raumtemperatur be- bzw. verhindert wird, aber bei den zum Aufschmelzen der erfindungsgemäßen Masse erforderlichen erhöhten Temperaturen (und darüber) ohne weiteres ablaufen kann. Eine weitere erfindungsgemäß bevorzugte Maßnahme, die alternativ oder zusätzlich zu den bereits genannten Maßnahmen eingesetzt werden kann, ist die Einverleibung einer oder mehrerer Substanzen in die erfindungsgemäße Masse, die bei den zum Aufschmelzen der Masse erforderlichen erhöhten Temperaturen (oder sogar noch höheren Temperaturen) einen Katalysator für die Kondensation der noch vorhandenen kondensationsfähigen Bindungsstellen (insbesondere eine Säure oder Base) freisetzt.

Schließlich besteht eine weitere bevorzugte erfindungsgemäße Maßnahme, die ebenfalls alternativ oder zusätzlich zu den anderen Maßnahmen eingesetzt werden kann, darin, hydrolysierbare Ausgangsverbindungen mit organischen Gruppen R einzusetzen, die bei den zum Aufschmelzen der Masse erforderlichen erhöhten Temperaturen (oder darüberliegenden Temperaturen) mit ihresgleichen oder anderen reaktiven organischen Gruppen R eine (gegebenenfalls katalysierte) Reaktion eingehen können, die zu einer organischen Vernetzung der vorhandenen Kondensate führt. In diesem Fall ist es zum Beispiel möglich, der erfindungsgemäßen Masse einen thermischen Polymerisations- (Polyadditions-) bzw. Polykondensationskatalysator einzuverleiben, der erst bei dem zum Aufschmelzen der erfindungsgemäßen Masse erforderlichen Temperaturen (oder darüber) aktiviert wird. So kann neben der anorganischen Vernetzung der Kondensate K (= Weiterkondensation) auch eine zusätzliche organische Vernetzung dieser Kondensate erfolgen. Selbstverständlich ist es auch möglich, eine derartige organische Vernetzung photochemisch (vorzugsweise mit zugegebenem Photoinitiator und mit UV-Bestrahlung) und zusätzlich zu einer thermischen Härtung (z.B. im Anschluß daran) durchzuführen.

Die oben dargelegten Maßnahmen werden im folgenden näher erläutert.

Für die sterische Be- bzw. Verhinderung der Kondensation von hydrolysierten Spezies bei Raumtemperatur bzw. einer Temperatur, die für die später erforderliche Entfernung von flüchtigen Bestandteilen aus der Reaktionsmischung unter Bildung einer festen Masse erforderlich ist, eignen sich sperrige organische Gruppen R, wie beispielsweise gegebenenfalls substituierte C₆₋₁₀-Arylgruppen und (cyclo)aliphatische Gruppen, die eine sterisch Hinderung, die mindestens derjenigen einer Isopropylgruppe entspricht, liefern. Für diesen Zweck erfindungsgemäß bevorzugte Gruppen R sind (gegebenenfalls substituierte) Phenylgruppen. Dementsprechend ist eine bevorzugte Gruppe von hydrolysierbaren Ausgangsverbindungen für die Herstellung der Kondensate K diejenige der hydrolysierbaren Phenylsilane und Diphenylsilane, z.B. Phenyltrimethoxysilan und Phenyltriethoxysilan und der entsprechenden Diphenyl-Verbindungen, aber auch der bereits teilweise oder vollständig hydrolysierten Verbindungen wie beispielsweise Diphenylsilandiol. Zusätzlich oder alternativ zur Bereitstellung von sterisch anspruchsvollen Gruppen R (insbesondere am Siliciumatom) ist es auch möglich, thermolabile organische Gruppen R in den Ausgangsverbindungen vorzusehen, z.B. Ethylgruppen und Vinylgruppen, die sich bei erhöhten Temperaturen zersetzen und dadurch den Weg für eine (direkte) Verknüpfung der Zentralatome, an die sie gebunden waren, freimachen. Somit besteht eine weitere bevorzugte Gruppe von Ausgangsverbindungen für die erfindungsgemäß eingesetzten Kondensate K aus Silanen mit beispielsweise Ethyl- oder Vinylgruppen, z.B. Ethyltri(m)ethoxysilan und Vinyltri(m)ethoxysilan.

Die oben erwähnte organische Vernetzung der erfindungsgemäß eingesetzten Kondensate kann beispielsweise dadurch bewerkstelligt werden, daß man von hydrolysierbaren Ausgangsverbindungen (vorzugsweise Silicium-Verbindungen) ausgeht, die über organische Reste R verfügen, die bei höheren Temperaturen entweder von sich aus oder mit Hilfe eines bei diesen höheren Temperaturen aktivierten Katalysators eine (Ketten)reaktion eingehen. In diesem Zusammenhang wären insbesondere epoxyhaltige Gruppen R und Gruppen R, die eine reaktionsfähige Kohlenstoff-Kohlenstoff-Mehrfachbindung (insbesondere Doppel-bindung) aufweisen, zu nennen. Konkrete und bevorzugte Beispiele für derartige Reste R sind Glycidoxyalkyl- und (Meth)acryloxyalkyl-Reste, die vorzugsweise an ein Siliciumatom gebunden sind und vorzugsweise 1 bis 6 Kohlenstoffatome im Alkyl-Rest aufweisen, insbesondere Glycidoxypropyl- und Methacryloxypropylgruppen. Dementsprechend besteht eine weitere Gruppe von bevorzugt eingesetzten hydrolysierbaren Ausgangsverbindungen aus Glycidoxyalkyltri(m)ethoxysilan und Methacryloxyalkyltri(m)ethoxysilan. Selbstverständlich ist es auch möglich, Ausgangsverbindungen mit unterschiedlichen Gruppen R, die miteinander reagieren können, einzusetzen, wie beispielsweise Gruppen R mit Kohlenstoff-Kohlenstoff-Mehrfachbindung und Gruppen R mit einer SH-Gruppe (die sich bei erhöhten Temperaturen und gegebenenfalls Katalyse an die Kohlenstoff-Kohlenstoff-Mehrfachbindung addieren kann) oder Gruppen R mit einem Epoxid-Ring und Gruppen R mit einer Aminogruppe. Ganz allgemein können Gruppen R oder Kombinationen von Gruppen R eingesetzt werden, die bei erhöhten Temperaturen eine gegebenenfalls katalysierte Polymerisations- (Polyadditions-) oder Polykondensationsreaktion eingehen können. Polyadditionsreaktionen (einschließlich Polymerisationsreak-tionen) werden dabei bevorzugt, da sie im Gegensatz zu Kondensationsreaktionen zu keinen Nebenprodukten führen. In einem derartigen Fall kann es gegebenenfalls ratsam sein, Polykondensate mit miteinander reaktiven Gruppen R getrennt herzustellen und erst als Feststoffe miteinander zu vereinigen.

Wie bereits oben näher erläutert, besteht eine weitere Maßnahme zur Einstellung des gewünschten Viskositätsverlaufs bzw. zur Hemmung der weiteren Kondensation der eingesetzten Kondensate K bei Raumtemperatur oder leicht erhöhter Temperatur darin, kondensationsfähige Stellen an den Zentralatomen durch komplexbildende Spezies zu blockieren, wobei die entsprechenden Komplexe bei den zum Aufschmelzen der erfindungsgemäßen Masse erforderlichen Temperaturen (oder darüber) entfernt werden und damit den Weg für eine weitere Kondensation freimachen. Für diesen Zweck geeignete Komplexbildner wurden bereits oben angegeben. Derartige Komplexbildner werden vorzugsweise in Kombination mit Metaliverbindungen, die sich (im Zentralatom) von den hydrolysierbaren Silanen unterscheiden, eingesetzt, können aber auch in Form komplexierter Silane verwendet werden.

Eine Möglichkeit, die Weiterkondensation der erfindungsgemäß eingesetzten Kondensate K bei erhöhten bzw. hohen Temperaturen zu fördern und auf diese Weise das gewünschte Viskositätsverhalten einzustellen, besteht darin, der erfindungsgemäßen Masse eine oder mehrere Substanzen einzuverleiben, die bei erhöhten Temperaturen hinsichtlich der Kondensation katalytisch aktive Spezies abspalten bzw. freisetzen. Beispiele für derartige katalytisch aktive Spezies sind Protonen, Hydroxylionen, Fluoridionen und dergleichen. Beispielsweise setzen Tetraalkyl-ammoniumsalze bei Temperaturen über 160°C tertiäre Amine, die ebenfalls katalytisch wirksam sind, frei. Wie bereits erwähnt, kann dasselbe Prinzip auch auf die organische Vernetzung angewendet werden, nämlich indem man in der erfindungsgemäßen Masse z.B. einen thermisch aktivierbaren Radikalstarter, wie beispielsweise ein Peroxid oder eine Azo-Verbindung, einverleibt, der dann die thermische Polymerisation entsprechender organischer Gruppen R initiiert.

Neben den obigen zur Herstellung der erfindungsgemäßen Masse wesentlichen bzw. bevorzugten Komponenten können dieser Masse selbstverständlich auch andere Komponenten zugesetzt bzw. in diese einverleibt werden, um zusätzlich andere wünschenswerte Eigenschaften zu erzielen. Zum Beispiel ist es möglich, als Teil der zu hydrolysierenden Ausgangsverbindungen solche mit ganz oder teilweise fluorierten Resten R einzusetzen, um zu Überzügen mit hydro- und oleophoben Eigenschaften zu gelangen. Als geeignete Ausgangsverbindungen wären hier beispielsweise Trialkoxysilane mit einem 2- (vorzugsweise C₂₋₁₂-) Perfluoralkylethyl-Rest zu nennen. Eine andere Möglichkeit zur Einführung von Fluoratomen in die erfindungsgemäße Masse besteht z.B. in der Verwendung von Perfluorcarbonsäuren (beispielsweise als komplexbildende Spezies) oder von fluorierten organischen Copolymeren (siehe unten).

Wenn eine organische Vernetzung der in der erfindungsgemäßen Masse eingesetzten Kondensate K mit Hilfe von bei erhöhten Temperaturen (oder bei Bestrahlung) zu einer Polyadditions- oder Polykondensationsreaktion befähigten Gruppen R beabsichtigt ist, kann es sich als nützlich erweisen, der erfindungsgemäßen Masse auch entsprechende rein organische Monomere einzuverleiben, die bei Raumtemperatur vorzugsweise fest sind und in die Polyadditions- bzw. Polykondensationsreaktion der entsprechenden organischen Gruppen R miteinbezogen werden können, z.B. Caprolactam, Maleinsäure oder Pyromellitsäuredianhydrid. Dasselbe trifft auch auf die mögliche Einverleibung von Polymeren in die erfindungsgemäße Masse zu, wobei in diesem Zusammenhang z.B. Silan-funktionalisierte Polyester und andere Pulverlackmaterialien zu nennen wären.

Die erfindungsgemäße Masse kann auch übliche Füllstoffe enthalten. Besonders bevorzugt ist der Einbau von nanopartikulären, gegebenenfalls oberflächenmodifizierten Oxidpulvern (Teilchengröße vorzugsweise bis zu 200 nm, inbesondere bis zu 100 nm), wie z.B. solchen von Siliciumdioxid, Aluminiumoxid (insbesondere Böhmit) und Zirkoniumoxid. Diese nanopartikulären Oxidpulver können entweder bereits während der Herstellung der Kondensate und/oder nach deren Herstellung in die erfindungsgemäße Masse einverleibt werden.

Selbstverständlich kann die erfindungsgemäße Masse auch andere für Pulverlacke übliche Zusätze, wie beispielsweise Verlaufsadditive, Glanzbildner, Farbstoffe, Pigmente und dergleichen, enthalten. Bevorzugt besteht die erfindungsgemäße Masse jedoch zu mindestens 50 Gew.-% und insbesondere zu mindestens 80 Gew.-% aus den obigen Kondensaten K. Füllstoffe und/oder die oben erwähnten nanopartikulären Oxidpulver werden vorzugsweise in einer Menge von bis zu 25 Gew.-%, insbesondere bis zu 15 Gew.-%, eingesetzt.

Die Herstellung der erfindungsgemäßen Masse kann durch dem Fachmann auf diesem Gebiet geläufige Verfahren, z.B. den Sol-Gel-Prozeß, erfolgen. Daran schließt sich eine Entfernung der im Zuge des Herstellungsverfahrens eingesetzten flüchtigen Hilfsstoffe (z.B. organische Lösungsmittel und Wasser) und der während des Verfahrens gebildeten flüchtigen Materialien (z.B. Alkohole im Falle der Hydrolyse von Alkoxiden) an. Diese Entfernung erfolgt ebenfalls mit Hilfe von gängigen Verfahren und Vorrichtungen, wie beispielsweise Rotationsverdampfer, Dünnschichtverdampfer, Sprühtrockner und dergleichen.

Nach Entfernung der flüchtigen Bestandteile unter Erhalt einer festen Masse kann diese gegebenenfalls auf eine geeignete Korngröße bzw. eine geeignete Korngrößenverteilung weiterverarbeitet werden, beispielsweise durch Mahlen, Sieben und dergleichen.

Der Einsatz der so erhaltenen Masse (Pulverlack) für die Beschichtung von Substraten, insbesondere solchen aus Metallen, Kunststoffen, Glas und Keramik, kann ebenfalls mit Hilfe bekannter Verfahren erfolgen, vorzugsweise jedoch durch elektrostatisches Pulverlackieren.

Die folgenden Beispiele dienen der weiteren Veranschaulichung der vorliegenden Erfindung. Im Rahmen der Erfindung wird die Viskosität der Kondensate K entsprechend den Normen DIN 1342 T1 und T2 sowie DIN 53018 T1 unter Verwendung eines Rotationsviskosimeters ("Rheolab MC 20" der Fa. Physica Meßtechnik GmbH & Co KG, D-70567 Stuttgart) mit Kegel-Platte-Geometrie gemäß DIN 53018 T1 (Kegelwinkel 2°) gemessen. Es werden zwei Meßsysteme angewandt:
- Meßsystem 1:: Kegelradius 1,25 cm; einsetzbar für Viskositätsmeßbereiche von 0,5 bis 3200 Pa.s;
- Meßsystem 2:: Kegelradius 3,75 cm; einsetzbar für Viskositätsmeßbereiche von 0,02 bis 120 Pa.s.

Das Meßsystem 2 ermöglicht im Viskositätsbereich unterhalb 1 Pa.s exaktere Messungen als das Meßsystem 1. Im Überschneidungsbereich beider Meßsysteme werden bei gleichen Kondensaten und bei gleicher Temperatur identische Viskositätswerte erhalten. In allen Fällen erfolgt die Viskositätsmessung mit einer Scherrate von 1,05 rad/s und einer Heizrate von 2 K/min im Temperaturbereich von 50 bis 200°C.

### Beispiel 1

14,82 g (0,1 Mol) Vinyltrimethoxysilan wurden mit 48,87 g (0,2 Mol) Diphenyldimethoxysilan versetzt. Unter starkem Rühren wurden zu dem Gemisch tropfenweise 37,8 g 0,1 n HCI gegeben. Dabei trat eine leichte Erwärmung auf. Nach beendeter Zugabe wurde bei Raumtemperatur 1 h weitergerührt. Mit zunehmender Reaktionszeit bildete sich aus der zunächst vorhandenen Suspension eine weiße, feste Masse. Das Produkt wurde bei 40°C und einem Enddruck von ca. 5 - 6 mbar 1 h abrotiert. Hierbei erhält man ein rieselfähiges Pulver mit einem Viskositätsminimum von 0,02 bis 0,03 Pa.s bei einer Schmelztemperatur von 172°C.

Das Pulver wurde nach einem Mahlvorgang (Red Devil, Fa. Erichsen) elektrostatisch (Handsprühpistole, Fa. Wagner-ESB) auf Aluminium-Bleche (Al 99,5 mill finish, vorbehandelt mit alkalischem Tensid (Almeco®, Fa. Henkel)) appliziert.

Die beschichteten Al-Bleche wurden 30 min bei 170°C im Umlufttrockenschrank ausgehärtet. Die resultierende glatte, transparente Beschichtung von 35 µm Dicke wies quasi-duroplastisches Verhalten auf, was durch DSC-Untersuchungen (DSC 200, Fa. Netsch) nachgewiesen wurde.

### Beispiel 2

24,8 g (0,1 Mol) Methacryloxypropyltrimethoxysilan (MPTS) wurden mit 73,3 g (0,3 Mol) Diphenyldimethoxysilan versetzt. Unter starkem Rühren wurde zu dem Gemisch eine Mischung aus 1,2 g (0,02 Mol) γ-AlO(OH) und 73 g 0,1 n HCI getropft. Dabei trat eine deutliche Erwärmung auf. Die Dispergierung des γ-AlO(OH) im wäßrigen Medium erfolgte in der Form, daß zunächst die wäßrige HCI-Lösung vorgelegt wurde, anschließend unter starkem Rühren das γ-AlO(OH) (Disperal® Sol P3, Fa. Condea) langsam hinzugegeben wurde und abschließend die Suspension ca. 20 min bei Raumtemperatur Ultraschall-behandelt wurde.

Nach beendeter Zugabe der wäßrigen γ-AlO(OH)-Lösung wurde bei Raumtemperatur 15 min weitergerührt. Mit zunehmender Reaktionszeit bildete sich aus der zunächst vorhandenen Suspension eine weiße, feste Masse. Das Produkt wurde bei 40°C und einem Enddruck von ca. 5 - 6 mbar 1 h abrotiert. Hierbei erhält man ein nicht rieselfähiges Pulver mit einem Viskositätsminimum von 0,02 bis 0,04 Pa.s bei einer Schmelztemperatur von 147°C.

Das Pulver wurde gleichmäßig auf Aluminium-Bleche (Al 99,5 mill finish, vorbehandelt mit alkalischem Tensid (Almeco®, Fa. Henkel)) aufgetragen und 30 min bei 170°C im Umlufttrockenschrank ausgehärtet.

Die resultierende transparente Beschichtung wies quasi-duroplastisches Verhalten auf, was durch DSC-Untersuchungen nachgewiesen wurde.

### Beispiel 3

14,82 g (0,1 Mol) Vinyltrimethoxysilan wurden mit 61,09 g (0,25 Mol) Diphenyldimethoxysilan versetzt. Unter starkem Rühren wurde zu dem Gemisch eine Mischung aus 1,2 g (0,0047 Mol) N-Trimethoxysilylpropyl-N,N,N-trimethylammoniumchlorid und 45,5 g 0,1 n HCI getropft. Dabei trat eine leichte Erwärmung auf. Nach beendeter Zugabe wurde bei Raumtemperatur 1 h weitergerührt. Mit zunehmender Reaktionszeit bildete sich aus der zunächst vorhandenen Suspension eine weiße, feste Masse. Das Produkt wurde bei 40°C und einem Enddruck von ca. 5 - 6 mbar 1 h abrotiert. Hierbei erhält man ein rieselfähiges Pulver mit einem Viskositätsminimum von 0,3 bis 1,8 Pa.s bei einer Schmelztemperatur von 90°C.

Das Pulver wurde gleichmäßig auf Aluminium-Bleche (Al 99,5 mill finish, vorbehandelt mit alkalischem Tensid (Almeco®, Fa. Henkel)) aufgetragen und 30 min bei 170°C im Umlufttrockenschrank ausgehärtet, was durch DSC-Untersuchungen nachgewiesen wurde.

### Beispiel 4

In einem 50 ml-Rundkolben wurden 0,015 Mol einer techn. Zirkoniumtetra-n-propylat-Lösung in n-Propanol vorgelegt (gravimetrisch bestimmter Gehalt an Zr[OPr]₄: 77,3 Gew.-%). Dem Zirkoniumtetra-n-propylat wurden unter Rühren 0,015 Mol Methacrylsäure langsam zugetropft, wobei eine leicht exotherme Reaktion auftrat. Die Reaktionsmischung wurde lichtgeschützt 30 min im verschlossenen Kolben gerührt und anschließend direkt weiterverarbeitet.

14,82 g (0,1 Mol) Vinyltrimethoxysilan wurden mit 48,87 g (0,2 Mol) Diphenyldimethoxysilan versetzt. Unter Rühren wurde diesem Gemisch die wie oben beschrieben hergestellte Zirkoniumtetra-n-propylat/Methacrylsäure-Mischung zugetropft.

Unter starkem Rühren wurden zu dem resultierenden Reaktionsgemisch tropfenweise 40 g 0,1 n HCI gegeben. Dabei trat eine leichte Erwärmung auf. Nach beendeter Zugabe wurde bei Raumtemperatur 1 h lichtgeschützt weitergerührt. Mit zunehmender Reaktionszeit bildete sich aus der zunächst vorhandenen Suspension eine weiße, feste Masse. Das Produkt wurde bei 40°C und einem Enddruck von ca. 5 - 6 mbar 1 h abrotiert. Hierbei erhält man ein rieseifähiges Pulver mit einem Viskositätsminimum von 0,03 bis 0,1 Pa.s bei einer Schmelztemperatur von 93°C.

Das Pulver wurde mit 2 Gew.-% Benzoin (bezogen auf das Fertigpulver) innig vermischt und nach einem Mahlvorgang gleichmäßig auf Aluminium-Bleche (Al 99,5 mill finish, vorbehandelt mit alkalischem Tensid (Almeco®, Fa. Henkel)) aufgetragen und 30 min bei 170°C im Umlufttrockenschrank ausgehärtet, was durch DSC-Untersuchungen nachgewiesen wurde.

### Beispiel 5

39,66 g (0,2 Mol) Phenyltrimethoxysilan, 14,82 g (0,1 Mol) Vinyltrimethoxysilan und 97,74 g (0,4 Mol) Diphenyldimethoxysilan wurden in der angegebenen Reihenfolge eingewogen. Unter starkem Rühren wurden zu dem Gemisch tropfenweise 91,8 g 0,1 n HCI gegeben. Dabei trat eine leichte Erwärmung auf. Nach beendeter Zugabe wurde bei Raumtemperatur 1 h weitergerührt. Mit zunehmender Reaktionszeit bildet sich aus der zunächst vorhandenen Suspension eine weiße, feste Masse. Das Produkt wurde bei 40°C und einem Enddruck von ca. 5 - 6 mbar 1 h abrotiert. Hierbei erhält man ein rieselfähiges Pulver mit einem Viskositätsminimum von 0,1 bis 0,3 Pa.s bei einer Schmelztemperatur von 100°C.

Das Pulver wurde gleichmäßig auf Aluminium-Bleche (Al 99,5 mill finish, vorbehandelt mit alkalischem Tensid (Almeco®, Fa. Henkel)) aufgetragen und 30 min bei 160°C im Umlufttrockenschrank ausgehärtet, was durch DSC-Untersuchungen nachgewiesen wurde.

### Beispiel 6

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) versetzt (Mischung A). Parallel wurde eine Mischung B wie folgt hergestellt: Zu 18 g 0,1 n HCI wurden unter starkem Rühren 0,36 g (0,006 Mol) γ-AIO(OH) portionsweise gegeben. Zu der entstehenden klaren Lösung wurden anschließend unter starkem Rühren 11,61 g (0,1 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension eine weiße, feste Masse. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 4,3 bis 8,6 Pa.s bei einer Schmelztemperatur von 90°C, einer mittleren Dichte von 1,29 g/cm³ und einer Korngrößenverteilung von 20 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bei 130°C im Umlufttrockenschrank thermisch behandelt. Der resultierende geschlossene, transparente Überzug von 10 - 20 µm Dicke weist gute Haftung auf (Gt 0/1, TT 0/1).

### Beispiel 7

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) versetzt. Zu dieser Lösung wurden portionsweise 26,88 g (0,025 Mol) fein gemörsertes Poly(Bisphenol A-co-epichlorhydrin)-glycidyl endcapped (Mn ca. 1075) gegeben. Nach ca. 15 min entstand eine klare Lösung (Mischung A). Parallel wurde eine Mischung B wie folgt hergestellt: Zu 18 g 0,1 n HCI wurden unter starkem Rühren 11,61 g (0,1 Mol) Maleinsäure portionsweise hinzugefügt. Nach beendeter Zugabe wurde bei Raumtemperatur 10 min weitergerührt, so daß eine transparente Mischung entstand.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension eine weiße, feste Masse. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 10 Pa.s bei einer Schmelztemperatur von 93°C, einer mittleren Dichte von 1,29 g/cm³ und einer Korngrößenverteilung von 20 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bei 130°C im Umlufttrockenschrank thermisch behandelt. Der resultierende geschlossene, transparente Überzug von 10 - 20 µm Dicke weist gute Haftung auf (Gt 0/1, TT 0/1).

### Beispiel 8

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) versetzt (Mischung A). Parallel wurde eine Mischung B wie folgt hergestellt: Zu 18 g 0,1 n HCI wurden 11,61 g (0,1 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension eine weiße, feste Masse. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 13,3 Pa.s bei einer Schmelztemperatur von 102°C, einer mittleren Dichte von 1,29 g/cm³ und einer Korngrößenverteilung von 20 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bei 130°C im Umlufttrockenschrank thermisch behandelt. Der resultierende geschlossene, transparente Überzug von 10 - 20 µm Dicke weist gute Haftung auf (Gt 0/1, TT 0/1).

### Beispiel 9

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS), 5,44 g (0,015 Mol) Bis(3-glycidoxypropyl)tetramethyldisiloxan (BGTS), 6,54 g (0,03 Mol) Pyromellitsäuredianhydrid und bis zu 3,00 g (0,05 Mol) SiO₂ (10,00 g Organosol® (Kieselsol in 2-Propanol, SiO₂-Gehalt im Sol = 29,9%, Fa. Bayer)) versetzt.

Unter starkem Rühren und Eiskühlung wurden zu der entstandenen weißen Suspension tropfenweise 18 g 0,1 n HCI innerhalb von 5 min gegeben. Nach beendeter Zugabe wurde 14 h bei Raumtemperatur weitergerührt. Mit zunehmender Reaktionszeit bildete sich aus der zunächst vorhandenen Suspension ein transparentes Sol. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 80 bis 95 Pa.s bei einer Schmelztemperatur im Bereich von 95 bis 105°C, einer mittleren Dichte von 1,26 g/cm³ und einer Korngrößenverteilung von 10 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bis 120 min bei 120 bis 150°C im Umlufttrockenschrank thermisch behandelt. Der resultierende geschlossene, transparente Überzug von 10 - 25 µm Dicke weist sehr gute Haftung auf (Gt 0/1, TT 0/1).

### Beispiel 10

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS), 2,3 g (0,01 Mol) Dodecandicarbonsäure (DD) und bis zu 6 g (0,1 Mol) SiO₂ (20,00 g Organosol® (Kieselsol in 2-Propanol, SiO₂-Gehalt im Sol = 29,9%, Fa. Bayer)) versetzt (Mischung A). Parallel wurde eine Mischung B wie folgt hergestellt: Zu 18 g 0,1 n HCI wurden 11,61 g (0,1 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension ein klares Sol. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 6,5 bis 10 Pa.s bei einer Schmelztemperatur im Bereich von 90 bis 100°C, einer mittleren Dichte von 1,29 g/cm³ und einer Korngrößenverteilung von 10 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bis 120 min bei 120 bis 150°C im Umlufttrockenschrank thermisch behandelt. Der resultierende geschlossene, transparente Überzug von 10 - 25 µm Dicke weist sehr gute Haftung auf (Gt 0/1, TT 0/1).

### Beispiel 11

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) und bis zu 3,00 g (0,05 Mol) SiO₂ (10,00 g Organosol® (Kieselsol in 2-Propanol, SiO₂-Gehalt im Sol = 29,9%, Fa. Bayer)) versetzt (Mischung A). Parallel wurde eine Mischung B wie folgt hergestellt: Zu 18 g 0,1 n HCI wurden 11,61 g (0,1 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension ein klares Sol. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einem Viskositätsminimum von 8,4 Pa.s bei einer Schmelztemperatur im Bereich von 85 bis 95°C, einer mittleren Dichte von 1,29 g/cm³ und einer Korngrößenverteilung von 10 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bis 120 min bei 120°C bis 150°C im Umlufttrockenschrank thermisch behandelt. Es resultierten geschlossene, transparente Überzüge von 10 - 25 µm Dicke.

### Beispiel 12

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) versetzt (Mischung A). Parallel wurde eine Mischung B wie folgt hergestellt: Zu 18 g 0,1 n HCI wurden unter starkem Rühren 0,36 g (0,006 Mol) γ-AlO(OH) portionsweise gegeben. Zu der entstehenden klaren Lösung wurden anschließend unter starkem Rühren 11,61 g (0,1 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen Suspension eine weiße, feste Masse. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhielt man ein rieselfähiges Pulver mit einer mittleren Dichte von 1,29 g/cm³ und einer Korngrößenverteilung von 20 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bei 130°C im Umlufttrockenschrank thermisch behandelt. Der resultierende geschlossene, transparente Überzug von 10 - 20 µm Dicke weist gute Haftung zum Substrat auf (Gt 0/1, TT 0/1).

### Beispiel 13

24,63 g (0,1 Mol) [β-(3,4-Epoxycyclohexyl)ethyl]trimethoxysilan (ETMS) wurden unter starkem Rühren bei Raumtemperatur mit 24,44 g (0,1 Mol) Diphenyldimethoxysilan (DPDMS) und 6,54 g (0,03 Mol) Pyromellitsäuredianhydrid versetzt.

Unter starkem Rühren und Eiskühlung wurden zu der entstandenen weißen Suspension tropfenweise 18 g 0,1 n HCI innerhalb von 5 min gegeben. Nach beendeter Zugabe wurde 14 h bei Raumtemperatur weitergerührt. Mit zunehmender Reaktionszeit bildete sich aus der zunächst vorhandenen Suspension ein transparentes Sol. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einer mittleren Dichte von 1,26 g/cm³ und einer Korngrößenverteilung von 10 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bis 120 min bei 120 bis 150°C im Umlufttrockenschrank thermisch behandelt. Der resultierende geschlossene, transparente Überzug von 10 - 25 µm Dicke weist sehr gute Haftung auf (Gt 0/1, TT 0/1).

### Beispiel 14

24,63 g (0,1 Mol) [β-(3,4-Epoxycyclohexyl)ethyl]trimethoxysilan (ETMS) wurden unter starkem Rühren bei Raumtemperatur mit 12,22 g (0,05 Mol) Diphenyldimethoxysilan (DPDMS) versetzt (Mischung A). Parallel wurde eine Mischung B wie folgt hergestellt: Zu 10,8 g 0,1 n HCI wurden 5,8 g (0,05 Mol) Maleinsäure portionsweise hinzugefügt. Nach beendeter Zugabe wurde bei Raumtemperatur 10 min weitergerührt, bis eine transparente Mischung entstanden war.

Unter starkem Rühren und Eiskühlung wurde zu Mischung A tropfenweise Mischung B innerhalb von 30 min gegeben. Nach beendeter Zugabe wurde 4 h bei Raumtemperatur weitergerührt. Mit zunehmender Reaktionszeit bildete sich aus der zunächst vorhandenen trüben Suspension eine transparente Reaktionsmischung. Das Produkt wurde bei 40°C und einem Enddruck von 10 - 20 mbar 0,5 h abrotiert, 5 h im Umlufttrockenschrank unter Vakuum (7 mbar, 45°C) getrocknet und einem Mahlvorgang (Red Devil, Fa. Erichsen) unterzogen. Hierbei erhält man ein rieselfähiges Pulver mit einer mittleren Dichte von 1,29 g/cm³ und einer Korngrößenverteilung von 20 - 100 µm. Das Pulver weist nach dem Schmelzvorgang duroplastisches Verhalten auf, was durch DSC-Untersuchungen nachgewiesen wurde. Das Beschichtungspulver ist elektrostatisch mit einer konventionellen Handsprühpistole (Fa. Wagner-ESB) auf Aluminium-Bleche (Al 99,5 mill finish, vorbehandelt mit alkalischem Tensid (Almeco®, Fa. Henkel)) applizierbar. Die beschichteten Alu-Bleche wurden 20 min bei 130°C im Umlufttrockenschrank thermisch behandelt. Der resultierende geschlossene, transparente Überzug von 10 - 20 µm Dicke weist gute Haftung auf (Gt 0/1, TT 0/1).

### Beispiel 15

Eine Mischung aus 25,3 ml Glycidoxypropyltrimethoxysilan, 80,3 ml Phenyltrimethoxysilan, 16,8 ml Kieselsol 300-30 (30%-ig, Fa. Bayer), 10 ml Wasser und 0,52 ml Salzsäure wurde intensiv gerührt, bis die Temperatur des Gemisches durch die Reaktionswärme auf ca. 45 bis 50°C anstieg. Danach wurde die Mischung sofort am Rotationsverdampfer bei einer Badtemperatur von ca. 50°C eingedampft. Als kein Lösungsmittel mehr überging, war ein zähflüssiges Material entstanden, das beim Erkalten pulverisiert werden konnte. Beim Erwärmen des Pulvers auf einer 200°C heißen Heizplatte schmolz das Pulver unter Schäumen dünnflüssig auf und verfestigte sich langsam innerhalb von 10 bis 15 Minuten. Es entstand eine transparente, hochglänzende Schicht.

### Beispiel 16

27,6 ml Phenyltrimethoxysilan, 17 g Diphenylsilandiol, 14 g Tetramethylammoniumhydroxid x 5 H₂O und 10 g H₂O wurden intensiv gerührt, bis sich das Gemisch durch die Reaktionswärme auf ca. 45 bis 50°C erwärmte. Nach dem Trocknen am Rotationsverdampfer erhielt man ein Pulver, das sehr dünnflüssig aufschmolz und bei 200°C innerhalb von 1 bis 2 Stunden aushärtete (Zersetzung des Tetramethylammoniumhydroxids).

## Patentansprüche

1. Feste, aufschmelzbare und thermisch härtbare Masse, umfassend Kondensate K, die von mindestens einem hydrolysierbaren Silan und gegebenenfalls einer oder mehreren hydrolysierbaren Metallverbindungen abgeleitet sind, wobei sich an Zentralatomen M der Kondensate K Gruppen A befinden, die eine Weiterkondensation der Kondensate ermöglichen, mindestens 70% der Zentralatome M eine oder mehrere daran gebundene, nicht hydrolysierbare organische Gruppen R aufweisen, von denen ein Teil durch mit den Zentralatomen M koordinierte komplexbildende Spezies ersetzt sein kann, und die Kondensate K im Temperaturbereich von 50 bis 200°C ein Viskositätsminimum im Bereich von 10 mPa.s bis 150 Pa.s durchlaufen.

2. Masse nach Anspruch 1, **dadurch gekennzeichnet, daß** es sich bei mindestens 75 und vorzugsweise mindestens 85% der Zentralatome M um Siliciumatome handelt.

3. Masse nach irgendeinem der Ansprüche 1 und 2, **dadurch gekennzeichnet, daß** die Kondensate K mindestens 5 und bis 300, vorzugsweise mindestens 10 und bis zu 200 Zentralatome M aufweisen.

4. Masse nach irgendeinem der Ansprüche 1 bis 3, **dadurch gekennzeichnet, daß** die von Silicium verschiedenen Zentralatome M aus der Gruppe Al, Ti und Zr ausgewählt sind.

5. Masse nach irgendeinem der Ansprüche 1 bis 4, **dadurch gekennzeichnet, daß** mindestens 80 und vorzugsweise mindestens 90% der Zentralatome M über mindestens eine organische Gruppe R verfügen.

6. Masse nach irgendeinem der Ansprüche 1 bis 5, **dadurch gekennzeichnet, daß** das Zahlenverhältnis x der insgesamt in den Kondensaten K vorhandenen Zentralatome M zu der Summe der an diesen Zentralatomen befindlichen, eine Weiterkondensation ermöglichenden Gruppen A 1:2 bis 20:1, vorzugsweise 1:1 bis 10:1, beträgt.

7. Masse nach irgendeinem der Ansprüche 1 bis 6, **dadurch gekennzeichnet, daß** die eine Weiterkondensation der Kondensate K ermöglichenden Gruppen A ausgewählt sind aus Hydroxy-, Alkoxy-, Aryloxy-, Acyloxy-, Enoxy- und Oximgruppen.

8. Masse nach irgendeinem der Ansprüche 1 bis 7, **dadurch gekennzeichnet, daß** die organischen Gruppen R zumindest zum Teil aus sterisch gehinderten Gruppen, insbesondere gegebenenfalls substituierten C₆₋₁₀-Arylgruppen und (cyclo)aliphatischen Gruppen mit einer sterischen Hinderung, die mindestens gleich derjenigen einer Isopropylgruppe ist, ausgewählt sind.

9. Masse nach irgendeinem der Ansprüche 1 bis 8, **dadurch gekennzeichnet, daß** die organischen Gruppen R zumindest zum Teil aus Gruppen ausgewählt sind, die eine gegebenenfalls katalysierte thermische und/oder photochemische Polyadditions- oder Polykondensationsreaktion eingehen können.

10. Masse nach Anspruch 9, **dadurch gekennzeichnet, daß** die organischen Reste R polymerisierbare Kohlenstoff-Kohlenstoff-Mehrfachbindungen und/oder Epoxid-Ringe einschließen.

11. Masse nach irgendeinem der Ansprüche 9 und 10, **dadurch gekennzeichnet, daß** ein Teil der Gruppen R Epoxid-Ringe und ein anderer Teil der Gruppen R Aminogruppen aufweist und/oder daß ein Teil der Gruppen R Kohlenstoff-Kohlenstoff-Mehrfachbindungen und ein anderer Teil der Gruppen R Thiolgruppen aufweist.

12. Masse nach irgendeinem der Ansprüche 1 bis 11, **dadurch gekennzeichnet, daß** ein Teil der Gruppen R Fluoratome aufweist.

13. Masse nach irgendeinem der Ansprüche 1 bis 12, **dadurch gekennzeichnet, daß** sie zusätzlich einen thermisch aktivierbaren bzw. freisetzbaren Polymerisations- bzw. Polyadditionskatalysator für die organische Vernetzung und/oder eine oder mehrere Substanzen, die bei erhöhten Temperaturen einen Katalysator für die Weiterkondensation der vorhandenen Kondensate freisetzen, enthält.

14. Masse nach irgendeinem der Ansprüche 1 bis 13, **dadurch gekennzeichnet, daß** die Kondensate K mindestens 50 Gew.-%, vorzugsweise mindestens 80 Gew.-%, der Masse ausmachen.

15. Masse nach irgendeinem der Ansprüche 1 bis 14, **dadurch gekennzeichnet, daß** sie zusätzlich Füllstoffe und/oder nanopartikuläre Oxidpulver in einer Menge von bis zu 25 Vol.-% enthält.

16. Verfahren zum Beschichten von Substraten mit einem Pulverlack, **dadurch gekennzeichnet, daß** der Pulverlack die Masse nach irgendeinem der Ansprüche 1 bis 15 umfaßt.

17. Verfahren nach Anspruch 16, **dadurch gekennzeichnet, daß** der Pulverlack durch elektrostatisches Pulverlackieren aufgebracht wird.

18. Verfahren nach irgendeinem der Ansprüche 16 und 17, **dadurch gekennzeichnet, daß** es sich bei den Substraten um solche aus Metallen, Kunststoffen, Glas oder Keramik handelt.

19. Verwendung der Masse nach irgendeinem der Ansprüche 1 bis 15 in einem Pulverlack für die Herstellung von abriebfesten und antikorrosiven Beschichtungen auf Metallen.

20. Verfahren zur Herstellung einer festen, aufschmelzbaren thermisch härtbaren Masse, umfassend die kontrollierte hydrolytische Polykondensation von einer oder mehreren hydrolysierbaren Verbindungen des Siliciums und/oder entsprechender Silanole, gegebenenfalls in Kombination mit einer oder mehreren hydrolysierbaren Metallverbindungen, wobei mindestens ein Teil der eingesetzten Verbindungen über nicht-hydrolysierbare organische Gruppen R verfügt, und/oder von entsprechenden Vorkondensaten, um zu Kondensaten zu gelangen, die im Temperaturbereich von 50 bis 200°C ein Viskositätsminimum im Bereich von 10 mPa.s bis 150 Pa.s durchlaufen, und die anschließende Entfernung von in der Polykondensation verwendeten oder während dieser gebildeten flüchtigen Komponenten.

21. Verfahren nach Anspruch 20, **dadurch gekennzeichnet, daß** es sich bei mindestens einer der eingesetzten hydrolysierbaren Verbindungen um ein Silan mit einer oder zwei Phenylgruppen als Gruppen R handelt.

22. Verfahren nach irgendeinem der Ansprüche 20 und 21, **dadurch gekennzeichnet, daß** mindestens eine der eingesetzten hydrolysierbaren Verbindungen ein Silan mit Epoxygruppen- und/oder Methacrylgruppen- und/oder Vinylgruppen-haltigem Rest R ist.

23. Verfahren nach irgendeinem der Ansprüche 20 bis 22, **dadurch gekennzeichnet, daß** mindestens ein Teil der eingesetzten hydrolysierbaren Metallverbindungen in komplexierter Form vorliegt.

24. Verfahren nach irgendeinem der Ansprüche 20 bis 23, **dadurch gekennzeichnet, daß** die Metallverbindungen aus solchen von Al, Ti und Zr ausgewählt werden.

25. Verfahren nach irgendeinem der Ansprüche 20 bis 25, **dadurch gekennzeichnet, daß** der Masse ein thermisch aktivierbarer bzw. freisetzbarer Katalysator für die Weiterkondensation der Kondensate K und/oder die Polyaddition oder Polykondensation entsprechender organischer Gruppen R sowie gegebenenfalls ein photochemisch aktivierbarer Katalysator für die Polyaddition/Polykondensation entsprechender organischer Gruppen R einverleibt wird.

## Claims

1. Solid, meltable and heat-curable composition which comprises condensates K derived from at least one hydrolysable silane and, if desired, from one or more hydrolysable metal compounds, central atoms M of the condensates K bearing groups A which permit further condensation of the condensates, at least 70% of the central atoms M having one or more nonhydrolysable organic groups R attached thereto, part of which may be replaced by complex-forming species coordinated with the central atoms M, and the condensates K passing through a viscosity minimum in the range from 10mPa.s to 150 Pa.s within the temperature range from 50 to 200°C.

2. Composition according to Claim 1, **characterized in that** at least 75 and preferably at least 85% of the central atoms M are silicon atoms.

3. Composition according to either of Claims 1 and 2, **characterized in that** the condensates K have at least 5 and up to 300, preferably at least 10 and up to 200 central atoms M.

4. Composition according to any one of Claims 1 to 3, **characterized in that** the central atoms M other than silicon are selected from the group Al, Ti and Zr.

5. Composition according to any one of Claims 1 to 4, **characterized in that** at least 80 and preferably at least 90% of the central atoms M have at least one organic group R.

6. Composition according to any one of Claims 1 to 5, **characterized in that** the numerical ratio x of the total number of central atoms M present in the condensates to the sum of the groups A which these central atoms bear and which permit further condensation is from 1:2 to 20:1, preferably from 1:1 to 10:1.

7. Composition according to any one of Claims 1 to 6, **characterized in that** the groups A which permit further condensation of the condensates K are selected from hydroxy, alkoxy, aryloxy, acyloxy, enoxy and oxime groups.

8. Composition according to any one of Claims 1 to 7, **characterized in that** the organic groups R are selected at least in part from sterically hindered groups, especially unsubstituted or substituted C₆₋₁₀ aryl groups and (cyclo)aliphatic groups having a steric hindrance which is at least equal to that of an isopropyl group.

9. Composition according to any one of Claims 1 to 8, **characterized in that** the organic groups R are selected at least in part from groups which are able to enter into a catalyzed or uncatalyzed thermal and/or photochemical addition-polymerization or condensation-polymerization reaction.

10. Composition according to Claim 9, **characterized in that** the organic radicals R include polymerizable carbon-carbon multiple bonds and/or epoxide rings.

11. Composition according to either of Claims 9 and 10, **characterized in that** one part of the groups R contain epoxide rings and another part of the groups R contain amino groups and/or **in that** one part of the groups R contain carbon-carbon multiple bonds and another part of the groups R contain thiol groups.

12. Composition according to any one of Claims 1 to 11, **characterized in that** part of the groups R contain fluorine atoms.

13. Composition according to any one of Claims 1 to 12, **characterized in that** it further comprises a thermally activatable or releasable addition-polymerization catalyst for the organic crosslinking and/or one or more substances which at elevated temperatures release a catalyst for the further condensation of the condensates that are present.

14. Composition according to any one of Claims 1 to 13, **characterized in that** the condensates K make up at least 50% by weight, preferably at least 80% by weight, of the composition.

15. Composition according to any one of Claims 1 to 14, **characterized in that** it further comprises fillers and/or nanoparticulate oxide powders in an amount of up to 25% by volume.

16. Process for coating substrates with a powder coating material, **characterized in that** the powder coating material comprises the composition according to any one of Claims 1 to 15.

17. Process according to Claim 16, **characterized in that** the powder coating material is applied by electrostatic powder coating.

18. Process according to either of Claims 16 and 17, **characterized in that** the substrates comprise those of metals, plastics, glass or ceramic.

19. Use of the composition according to any one of Claims 1 to 15 in a powder coating material for producing abrasion-resistant and anticorrosive coatings on metals.

20. Process for preparing a solid, meltable, heat-curable composition, comprising the controlled hydrolytic polycondensation of one or more hydrolysable compounds of silicon and/or corresponding silanols, alone or in combination with one or more hydrolysable metal compounds, at least part of the compounds used having non-hydrolysable organic groups R, and/or of corresponding precondensates, in order to obtain condensates which within the temperature range from 50 to 200°C pass through a viscosity minimum in the range from 10 mPa.s to 150 Pa.s, and the subsequent removal of volatile compounds used in the polycondensation or formed during it.

21. Process according to Claim 20, **characterized in that** at least one of the hydrolysable compounds used is a silane having one or two phenyl groups as groups R.

22. Process according to either of Claims 20 and 21, **characterized in that** at least one of the hydrolysable compounds used is a silane having a radical R containing epoxy groups and/or methacrylic groups and/or vinyl groups.

23. Process according to any one of Claims 20 to 22, **characterized in that** the hydrolysable metal compounds are present, at least in part, in complexed form.

24. Process according to any one of Claims 20 to 23, **characterized in that** the metal compounds are selected from compounds of Al, Ti and Zr.

25. Process according to any one of Claims 20 to 24, **characterized in that** incorporated into the composition is a thermally activatable and/or releasable catalyst for the further condensation of the condensates K and/or the addition polymerization or condensation polymerization of corresponding organic groups R and also, if desired, a photochemically activatable catalyst for the addition/condensation polymerization of corresponding organic groups R.

## Revendications

1. Masse solide, fusible et thermodurcissable, comprenant des condensats K, lesquels sont dérivés d'au moins un silane hydrolysable et éventuellement d'un ou plusieurs composés métalliques hydrolysables, où se trouvent sur des atomes centraux M du condensats K des groupes A, qui permettent une post-condensation des condensats, au moins 70% des atomes centraux M présentant un ou plusieurs radicaux organiques R non hydrolysables qui y sont liés, dont une partie peut être remplacée par une espèce complexante coordonnée aux atomes centraux M, et les condensats K passant, dans la plage de température de 50 à 200°C, par un minimum de viscosité de l'ordre de 10 mPa.s à 150 mPa.s.

2. Masse selon la revendication 1, **caractérisée en ce qu'**au moins 75 et de préférence au moins 85% des atomes centraux M sont des atomes de silicium.

3. Masse selon l'une quelconque des revendications 1 et 2, **caractérisée en ce que** les condensats K présentent au moins 5 et jusqu'à 300, de préférence au moins 10 et jusqu'à 200 atomes centraux M.

4. Masse selon l'une quelconque des revendications 1 à 3, **caractérisée en ce que** les atomes centraux M différents du silicium sont choisis dans le groupe formé par Al, Ti et Zr.

5. Masse selon l'une quelconque des revendications 1 à 4, **caractérisée en ce qu'**au moins 80 et de préférence au moins 90% des atomes centraux M disposent d'au moins un radical organique R.

6. Masse selon l'une quelconque des revendications 1 à 5, **caractérisée en ce que** la proportion numérique x du total des atomes centraux M présents dans les condensats K à la somme des groupes A se trouvant sur ces atomes centraux et permettant une post-condensation est de 1 : 2 à 20 : 1, de préférence de 1 : 1 à 10 : 1.

7. Masse selon l'une quelconque des revendications 1 à 6, **caractérisée en ce que** les groupes A qui permettent une post-condensation des condensats K sont choisis parmi des groupes hydroxy, alcoxy, aryloxy, acyloxy, énoxy et oxime.

8. Masse selon l'une quelconque des revendications 1 à 7, **caractérisée en ce que** les radicaux organiques R sont au moins en partie choisis parmi des radicaux à encombrement stérique, en particulier des radicaux aryle en C₆ à C₁₀ éventuellement substitués et des radicaux (cyclo)aliphatiques comportant un empêchement stérique au moins identique à celui d'un radical isopropyle.

9. Masse selon l'une quelconque des revendications 1 à 8, **caractérisée en ce que** les radicaux organiques R sont au moins en partie choisis dans des groupes capables d'intervenir dans des réactions de polyaddition ou de polycondensation à catalyse thermique et / ou photochimique éventuelle.

10. Masse selon la revendication 9, **caractérisée en ce que** les radicaux organiques R comprennent des noyaux époxy et / ou des liaisons multiples carbone - carbone polymérisables.

11. Masse selon l'une quelconque des revendications 9 et 10, **caractérisée en ce qu'**une partie des radicaux R présente des noyaux époxy et une autre partie des radicaux R présente des groupes amino et / ou qu'une partie des radicaux R présente des liaisons multiples carbone - carbone et une autre partie des radicaux R présente des groupes thiol.

12. Masse selon l'une quelconque des revendications 1 à 11, **caractérisée en ce qu'**une partie des radicaux R présente des atomes de fluor.

13. Masse selon l'une quelconque des revendications 1 à 12, **caractérisée en ce qu'**elle contient en outre un catalyseur de polymérisation ou de polyaddition à activation ou libération thermique pour la réticulation organique et / ou une ou plusieurs substances qui, à température élevée, libèrent un catalyseur pour la post-condensation des condensats présents.

14. Masse selon l'une quelconque des revendications 1 à 13, **caractérisée en ce que** les condensats K représentent au moins 50% en poids, de préférence au moins 80% en poids, de la masse.

15. Masse selon l'une quelconque des revendications 1 à 14, **caractérisée en ce qu'**elle contient en outre des charges et / ou des poudres d'oxydes nanoparticulaires en une quantité atteignant 25% en volume.

16. Procédé de revêtement de substrats au moyen d'une peinture en poudre, **caractérisé en ce que** la peinture en poudre comprend la masse selon l'une quelconque des revendications 1 à 15.

17. Procédé selon la revendication 16, **caractérisé en ce que** la peinture en poudre est appliquée par pistolage électrostatique de poudre.

18. Procédé selon l'une quelconque des revendications 16 et 17, **caractérisé en ce que** les substrats sont des substrats de métaux, de plastiques, de verre ou de céramique.

19. Utilisation de la masse selon l'une quelconque des revendications 1 à 15, dans une peinture poudre pour la préparation de revêtements résistants à l'usure et anticorrosion sur des métaux.

20. Procédé de préparation d'une masse solide, fusible et thermodurcissable, comprenant la polycondensation hydrolytique contrôlée d'un ou de plusieurs composés hydrolysables du silicium et / ou de silanols correspondants, éventuellement en combinaison avec un ou plusieurs composés métalliques hydrolysables, où au moins une partie des composés mis en oeuvre dispose de radicaux organiques R non hydrolysables, et / ou de précondensats correspondants, afin d'aboutir à des condensats qui passent, dans la plage de température de 50 à 220°C, par un minimum de viscosité de l'ordre de 10 mPa.s à 150 mPa.s, et l'élimination subséquente des composants volatils utilisés dans la polycondensation ou formés pendant celle-ci.

21. Procédé selon la revendication 20, **caractérisé en ce que** qu'au moins un des composés hydrolysables mis en oeuvre est un silane comportant un ou deux radicaux phényle en tant que radicaux R.

22. Procédé selon l'une quelconque des revendications 20 et 21, **caractérisé en ce qu'**au moins un des composés hydrolysables mis en oeuvre est un silane contenant un reste R comportant des radicaux époxy et / ou méthacryle et / ou vinyle.

23. Procédé selon l'une quelconque des revendications 20 à 22, **caractérisé en ce qu'**au moins une partie des composés métalliques hydrolysables mis en oeuvre est présente sous forme complexée.

24. Procédé selon l'une quelconque des revendications 20 à 23, **caractérisé en ce que** les composés métalliques sont choisis parmi ceux de Al, Ti et Zr.

25. Procédé selon l'une quelconque des revendications 20 à 25, **caractérisé en ce qu'**il est incorporé à la masse un catalyseur à activation ou libération thermique pour la post-condensation des condensats K et / ou la polyaddition ou la polycondensation de radicaux organiques R correspondants ainsi qu'éventuellement un catalyseur à activation photochimique pour la polyaddition / polycondensation de radicaux organiques R correspondants.
